# EUROPÄISCHE PATENTSCHRIFT

(11) **EP 2 252 885 B1**
(45) Veröffentlichungstag und Bekanntmachung des Hinweises auf die Patenterteilung: **13.07.2016**
(21) Anmeldenummer: 09720701.3
(22) Anmeldetag: 06.03.2009
(51) Int. Cl.: G01N 27/72, G01V 3/10, B65G 53/66

(54) **AUFNEHMERVORRICHTUNG ZUR ERMITTLUNG VON FREMDTEILEN**
RECEIVING DEVICE FOR DETERMINING FOREIGN PARTS
ÉQUIPEMENT RÉCEPTEUR POUR DÉTECTER DES PIÈCES ÉTRANGÈRES

(30) Priorität: 14.03.2008 DE 102008014417
(43) Veröffentlichungstag der Anmeldung: 24.11.2010
(73) Patentinhaber: Mesutronic Gerätebau GmbH, 94259 Kirchberg i Wald (DE)
(72) Erfinder: ARTINGER, Manfred, 94513 Schönberg (DE); SCHMALZBAUER, Johann, 94513 Schönberg (DE)
(74) Vertreter: Müller Hoffmann & Partner
(86) Internationale Anmeldenummer: PCT/EP2009/001642
(87) Internationale Veröffentlichungsnummer: WO 2009/112214

(56) Entgegenhaltungen:
- DE-A1- 2 643 447
- DE-A1- 3 924 566
- DE-A1- 4 424 162
- DE-A1- 19 830 584

## Beschreibung

Die Erfindung betrifft die Aufnehmer-Vorrichtung einer elektromagnetisch arbeitenden Einrichtung zur Ermittlung von Fremdanteilen in dem Materialstrom einer Rohrförderanlage.

Einrichtungen dieser Art sind z.B. als Metalldetektoren zur Verwendung in der Textilindustrie bekannt. Dabei dienen sie vor allem der Erkennung von für den Fertigungsablauf störenden Metallteilchen, die beispielsweise von den metallischen Bürsten der Maschinen abgegeben werden können. Auch in der Nahrungsmittelindustrie finden sie aus ähnlichen Gründen Verwendung. Da diese Detektoren auf Änderungen des elektromagnetischen Feldes reagieren und solche Änderungen auch bei nichtmetallischen Stoffen auftreten können, finden sie auch für die Ermittlung solcher Stoffe Verwendung. Eine besonders vorteilhafte Ausführung ist in der Deutschen Patentschrift 198 30 584 beschrieben, in der auch ausführlich einschlägiger Stand der Technik angegeben ist. Bei der Erfindung wird von einer solchen Ausführungs-form ausgegangen, für es charakteristisch ist, dass ein nichtmetallischer Rohrabschnitt im Förderweg der Rohrförderanlage von Spulen umschlossen wird, mit denen die durch Fremdanteile im Fördergutstrom verursachte Feldänderungen erfasst und einer Auwerteschaltung zugeführt werden. Zur Minderung des Einflusses von Störfeldern wird hierbei der nichtmetallische Rohrabschnitt von einem metallischen Abschirmgehäuse umfasst, das in die weiterführenden metallischen Transportrohre der Rohrförderanlage übergeht. Der nichtmetallischen Rohrabschnitt und das die Spulen umschliessende Abschirmgehäuse sind dabei gegen die weiterführenden metallischen Transportrohre für das Fördergut Rohre elektrisch isoliert um sogenannte vagabundierende Ströme weitgehend auszuschalten, weil diese das Messergebnis verfälschen können.

Ausgehend von einer solchen Ausführungsform werden nach der Erfindung an den beiden Endplatten des die Spulen umschliessenden Abschirmgehäuses für den Übergang auf die metallischen Transportrohre metallische Rohrflansche mit flächiger Auflagefläche gegen das Abschirmgehäuse, durch Zwischenlage einer dünnen Isoliermaterialschicht, elektrisch isoliert befestigt und desweiteren das so isolierte Anschirmgehäuse elektrisch leitend mit dem Masseanschluss-Punkt der Auswerteschaltung verbunden.

Hierdurch wird zum einen eine einfachere und sichere Montage der Vorrichtung am Einsatzort erreicht, weil die Isolierung beim Einbau vor Beschädigungen geschützt ist. Zum anderen wird hierdurch auch eine noch bessere Unterdrükkung des Einflusses von vagabundierenden Strömen und deren elektromagnetischen Störfeldern erreicht.

Empfehlenswert ist es die Verbindung des Abschirmgehäuses mit dem Masseanschluss-Punkt der Auswerteschaltung über eine Schirmung der von den Spulen zu der Auswerteschaltung führenden Leitungen vorzunehmen, die diese umfasst. Zweckmässig wird hierzu die Schirmung als die Leitungen umschliessendes metallisches Schirmgeflecht ausgebildet. Für die Auswerteschaltung empfiehlt sich die Unterbringung in einem abschirmenden Gehäuse, und dieses mit einen zentralen Masseanschluss-Punkt zu versehen, der zugleich als Bezugspotentialpunkt der Auswerteschaltung verwendet wird. Ferner empfiehlt sich eine grossflächige Ausbildung des Masseanschluss-Punktes. Das ist vorteilhaft in der Weise realisierbar, dass als grossflächiger Massenanschluss-Punkt eine Fläche des abschirmenden Gehäuses vorgesehen ist, die zugleich der Halterung der Auswerteschaltung dient.

Nachstehend wird die Erfindung anhand eines in der Zeichnung dargestellten Ausführungsbeispiels näher erläutert. In der Zeichnung zeigt.
die Figur 1 eine Übersicht der Aufnehmervorrichtung, die sich weitgehend an der Figur 1 der vorgenannten Patentschrift orientiert, und
die Figur 2 Details der Flanschverbindung an der linken Endplatte des Abschirmgehäuses nach der vorstehenden Figur 1 im unteren Bereich derselben.

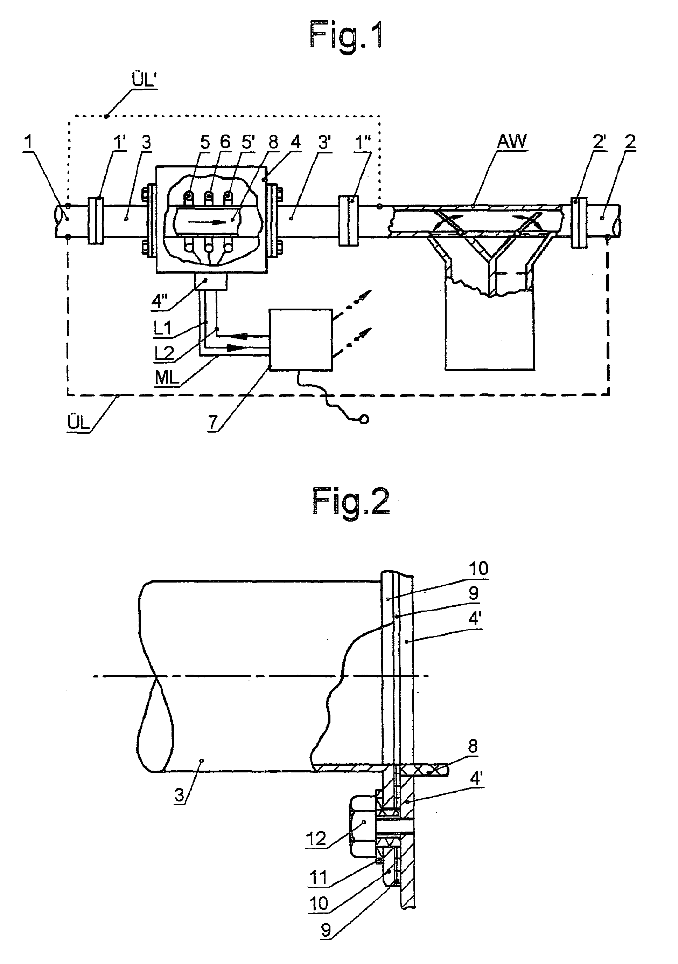

In der Figur 1 ist eine Einrichtung der in Rede stehenden Art schematisch gezeigt, die erfindungsgemäss umgestaltet ist. Es handelt sich um den Überwachungs- und Ausscheidungsabschnitt einer pneumatischen Rohrförderanlage für beispielsweise granulat- oder faserförmiges Fördergut, das im Saug- oder Druckverfahren über das Transport- bzw. Förderrohr 1 in die Einrichtung eintritt, die Einrichtung durchläuft und über das metallische Transport- bzw. Förderrohr 2 wieder austritt. An das Förderrohr 1 schließt eine Rohrflansch-Verbindung 1' an, die lösbar mit einem weiteren metallischen Rohrflansch 3 verbunden ist. Der Rohrflansch 3 hat an seinem der Flanschverbindung 1' abgewandten Ende eine flächige, ebene Anlagefläche. Dieser Rohrflansch ist - wie in der Figur 2 für den unteren Bereich um den Rohrflansch 3 dargestellt - unter Zwischenlage einer dünnen Isolierschicht 9 an der anschliessenden metallischen Endplatte des Abschirmgehäuses durch eine Verschraubung fest verankert. Hierzu ist eine entsprechende Bohrung sowohl in der metallischen Endplatte 4', als auch in dem Flanschteil 10 des Rohrflansches vorgesehen, in die eine Isoliertülle 11 eingesetzt ist, durch die eine Befestigungsschraube 12 hindurchgeführt und in die Endplatte 4' des Abschirmgehäuses 4 eingeschraubt ist. Eine ebensolche Ausbildung ist an der anderen Endplatte des Abschirmgehäuses vorgesehen. An dem ausgangsseitigen Rohrflansch 3' ist, gegebenenfalls unter Einfügung eines weiteren Transportrohres, eine Abscheideweiche AW über eine lösbare Rohrkupplung 1' lösbar befestigt.

Innerhalb des Abschirmgehäuses 4 ist ein nichtmetallischer Rohrabschnitt 8 eingelagert, so wie es in der einleitend genannten Patentschrift bereits ausgeführt ist. Dieser Rohrabschnitt 8 wird von Spulen 5, 6 und 5' umfaßt und dient als deren Träger. Er ist - wie aus der Figur 2 ersichtlich - in dem Übergangsbereich von der Endplatte 4' auf die flächenhafte Anliegefläche der Flanschverbindung 3 eingelagert. Dabei kann das Rohr 8 bündig mit der Aussenfläche der metallischen Endplatte abschliessen oder auch etwas in eine entsprechende Aussparung auf der ebenflächigen Anlagefläche des Rohrflansches Flansch 3 eingreifen.

Die Spule 6 dient der Erzeugung eines elektromagnetischen Feldes im Bereich des Rohrabschnitts 8 und die in Differentialschaltung geschalteten Spulen 5 und 5' dienen dem Empfang dieses Feldes. Die Speisung der Sendespule 6 erfolgt über ein Anschlussgehäuse 4" mittels der Leitung L1 durch einen in einem Auswertegerät 7 angeordneten Signalgenerator. Das Anschlußgehäuse 4" kann auch elektrische Anschlußteile, wie einen Vorverstärker und einen Differential-Übertrager enthalten. Über das Anschlussgehäuse erfolgt auch die Verbindung der Spulen 5 und 5', die über die Leitung L2 ihre Ausgangssignale an das Auswertegerät 7 abgeben.

Am anderen Ende des Abschirmgehäuses 4 ist ein zum Rohrflansch 3 gleicher Rohrflansch 3' angeordnet und über eine weitere Flanschverbindung 1' mit einer aus Metall bestehenden Abscheideweiche AW verbunden, an die über eine weitere Flanschverbindung 2' das weiterführende Förderrohr 2 anschließt.

Wesentlich ist, dass das Auswertegerät 7 einen Masseanschluss-Punkt hat, und dass dieser mit dem Abschirmgehäuse 4 elektrisch gut leitend verbunden ist. Beim Ausführungsbeispiel erfolgt dies über eine Masse-Leitung ML. Diese kann, ausser als getrennter Einzelleiter, auch durch eine die Signalleitungen L1 und L2 umschliessende Abschirmung gebildet werden. Wird das Auswertegeerät bzw. die Auswerteschaltung in einem abschirmenden metallischen Gehäuse untergebracht, so ist dafür Sorge zu tragen, dass auch dieses mit diesem Masseanschluss-Punkt verbunden ist. Das durch zwei Pfeile angedeutete Ausgangssignal der Auswerteschaltung 7 kann dann zur Steuerung weiterer Einrichtungsteile, wie einer Abscheidevorrichtung AW dienen.

Die als Beispiel gezeigte Abscheidevorrichtung AW hat mechanische Umlenkklappen, die von der Auswertevorrichtung 7 in der Weise gesteuert wird, daß bei einem Durchtritt eines beispielsweise metallischen Fremdanteils im Materialstrom durch die Spulen 5, 6 und 5' mit entsprechender Zeitverzögerung, beispielsweise mit einer Pneumatik oder Hydraulik, die beiden Umlenkklappen aus der punktiert eingezeichneten Lage in die stark ausgezogen gezeichnete Lage geschwenkt werden. Dadurch wird der entsprechende Fördergutanteil in den Abscheidebehälter der Abscheideweiche gelenkt. Nach der Abscheidung kehren dann die Umlenkklappen in ihre punktiert eingezeichnete Ausgangslage zurück.

Anstelle eines Mehrfachspulen-Systems mit getrennten Sende- und Empfangs-Spulen ist auch die bekannte Einspulentechnik einsetzbar, bei der eine einzelne Spule mit einer Sendeschwingung gespeist wird und aus den beim Passieren von Fremdanteilen auftretenden Änderungen des Impedanzwertes der Einzelspule das Schaltkriterium in der Auswerteschaltung abgeleitet wird.

Durch die erfindungsgemäße Ausbildung wird zum einen erreicht, daß störende elektromagnetische Felder aus der Umgebung der Gesamtanlage weitgehend wirkungslos auf das System sind, die meist unvermeidbaren mechanischen Vibrationen auf das Spulensystem ohne Einfluß bleiben und ausserdem der Einbau in den Transportweg einer Rohrförderanlage Montage wesentlich erleichtert wird.

Auch bei einer erfindungsgemässen Aufnehmer-Vorrichtung kann die häufig durch Sicherheitsvorschriften erforderliche vollständige elektrische Durchverbindung aller Anlagenteile, wie in der Figur 1 angedeutet, mittels einer Überbrückungsleitung ÜL erreicht werden. Eine solche elektrische Überbrückung kann auch, wie in der Figur 1 durch die punktierte Linie ÜL' angedeutet, unmittelbar an den an die beiden Flansche angrenzenden Transportrohren vorgesehen werden. Der Flansch 2' ist dann gegebenenfalls für sich elektrisch zu überbrücken. Man erhält auf diese Weise durch eine erhöhte elektrischen Symmetrie eine Kompensation von in diesen Bereich eingestreuten Störungen.

Für die isolierenden Zwischenlagen haben sich Materialien wie Moosgummi, Hartpapier (bekannt beispielweise unter dem Namen "Pertinax") und Kunststoffe wie Polytetrafluoräthylen (beispielsweise bekannt unter dem Handelsnamen "Teflon") bewährt. Die Dicke dieser Zwischenschicht kann im eingebauten Zustand bei etwa einen Millimeter und darunter liegen. Die Anzahl der Verschraubungsstellen (wie in der Figur 2 gezeigt) wird zweckmässig hoch gewählt. Für einen Durchmesser der Transportrohre von etwa 300 Millimeter und einem Aussendruchmesser des Rohrflansches 10 von etwa 360 Millimeter haben sich beispielsweise 16 über den Rohrflansch gleichmässig verteilte Verschraubungen bewährt. Anstelle einer durchgehenden Isolierschicht nach Art einer ringförmigen Scheibendichtung ist auch eine Ausbildung einsetzbar, bei der nur im Bereich der Verschraubungen segmentartige Isolationen aus den erwähnten Druckbeanspruchbaren Materialien vorgesehen und die Zwischenräume mit einer Dichtungsmasse so ausgefüllt werden, dass auch an diesen Stellen bzw. Zwischenräumen das die Spulen umfasssende Abschirmgehäuse dicht verschlossen ist.

## Patentansprüche

1. Rohrförderanlage mit einer Aufnehmer-Vorrichtung einer elektromagnetisch arbeitenden Einrichtung zur Ermittlung von Fremdanteilen in dem Materialstrom einer Rohrförderanlage, wobei die Rohrförderanlage umfasst:
einen nichtmetallischen Rohrabschnitt (8), mindestens eine Spule (5, 6, 5'), eine Auswerteschaltung (7) mit einem Masseanschluss-Punkt und ein metallisches Abschirmgehäuse (4) mit zwei über eine Isolierschicht (9) mit Rohrflansche (3, 3') verbindbaren Endplatten (4'), wobei
- der nichtmetallische Rohrabschnitt (8) im Förderweg der Rohrförderanlage von der mindestens einen Spule (5, 6, 5') umschlossen ist, die zur Erfassung von durch Fremdanteile im Fördergutstrom verursachten Feldänderungen mit der Auswerteschaltung (7) verbunden ist,
- bei der dieser nichtmetallische Rohrabschnitt (8) von dem metallischen Abschirmgehäuse (4) umfasst ist, das in weiterführende metallische Transportrohre (2) der Rohrförderanlage übergeht, und
- bei der das den nichtmetallischen Rohrabschnitt (8) und die Spulen (5, 6, 5') umschließende Abschirmgehäuse (4) gegen die weiterführenden metallischen Transportrohre (2) für das Fördergut elektrisch isoliert ist,
- an den zwei Endplatten (4') des die Spulen (5, 6, 5') umschließenden Abschirmgehäuses (4) die metallische Rohrflansche (3, 3') mit flächiger Auflagefläche gegen das Abschirmgehäuse (4), unter Zwischenlage einer Isoliermaterialschicht (9), elektrisch isoliert befestigt sind, und
- das dadurch isolierte Abschirmgehäuse (4) elektrisch leitend mit dem Masseanschluss-Punkt der Auswerteschaltung (7) verbunden ist.

2. Rohrförderanlage nach Anspruch 1, **dadurch gekennzeichnet, dass** das Abschirmgehäuse (4) eine Schirmleitung umfasst, die das Abschirmgehäuse (4) mit dem Masseanschluss-Punkt der Auswerteschaltung (7) verbindet, wobei die Schirmleitung von der mindestens einen Spule (5, 6, 5') zu der Auswerteschaltung (7) führende Leitungen (ML, L1, L2) umfasst.

3. Rohrförderanlage nach Anspruch 2, **dadurch gekennzeichnet, dass** die Schirmleitung eine Schirmung umfasst, wobei die Schirmung als ein die Leitungen umschließendes metallisches Schirmgeflecht ausgebildet ist.

4. Rohrförderanlage nach einem der vorhergehenden Ansprüche, **dadurch gekennzeichnet, dass** die Auswerteschaltung (7) in dem Abschirmgehäuse (4) angeordnet ist, das einen zentralen Masseanschluss-Punkt hat, der zugleich als Bezugspotentialpunkt der Auswerteschaltung (7) vorgesehen ist.

5. Rohrförderanlage nach Anspruch 4, **dadurch gekennzeichnet, dass** der zentrale Masseanschluss-Punkt durch eine Fläche des Abschirmgehäuses (4) ausgebildet ist.

6. Rohrförderanlage nach Anspruch 5, **dadurch gekennzeichnet, dass** die Fläche des Abschirmgehäuses (4) zugleich der Halterung der Auswerteschaltung (7) dient.

7. Rohrförderanlage nach einem der vorhergehenden Ansprüche, **dadurch gekennzeichnet, dass** die Rohrförderanlage zusätzlich einen Überbrückungsleiter (ÜL') zur elektrischen Durchverbindung aller Anlagenteile umfasst, wobei der Überbrückungsleiter (ÜL') den weiterführenden Transportrohren (2) zugeordnete, dem Abschirmgehäuse (4) abgewandte Flanschteile elektrisch durchverbindet.

## Claims

1. A tube conveyor with a sensing device of an electromagnetically operating apparatus for the detection of foreign contents in the material stream of a tube conveyor, wherein the tube conveyor comprises:
a non-metallic tube section (8), at least one coil (5, 6, 5'), an evaluation circuit (7) with a ground point, and a metallic shielding case (4) with two end plates (4') which can be connected by means of tube flanges (3, 3') via an insulating layer (9), wherein
- the non-metallic tube section (8) in the conveying path of the tube conveyor is enclosed by the at least one coil (5, 6, 5') which is connected to the evaluation circuit (7) to detect field changes caused by foreign contents in the stream of material being conveyed
- wherein this non-metallic tube section (8) is encompassed by the metallic shielding case (4) which passes into continuing metallic transporting tubes (2) of the tube conveyor, and
- wherein the shielding case (4) enclosing the non-metallic tube section (8) and the coils (5, 6, 5') is electrically insulated from the continuing metallic transporting tubes (2) for the material being conveyed,
- the metallic tube flanges (3, 3') with a flat supporting surface are attached at the two end plates (4') of the shielding case (4) enclosing the coils (5, 6, 5') against the shielding case (4) in an electrically insulating manner and with a thin layer of insulating material (9) being placed intermediately, and
- the shielding case (4) thereby insulated is connected to the ground point of the evaluation circuit (7) in an electrically conducting manner.

2. The tube conveyor according to Claim 1, **characterized in that** the shielding case (4) encompasses a shielding line for connecting the shielding case (4) to the ground point of the evaluation circuit (7), wherein the shielding line encompasses lines (ML, L1, L2) running from the at least one coil (5, 6, 5') to the evaluation circuit (7).

3. The tube conveyor according to Claim 2, **characterized in that** the shield line encompasses a shield, wherein the shield is formed as a metallic shielding braid enclosing the lines.

4. The tube conveyor according to anyone of the preceding claims, **characterized in that** the evaluation circuit (7) is arranged in the shielding case (4) including a central ground point which is, at the same time, provided as a reference potential point of the evaluation circuit (7).

5. The tube conveyor according to Claim 4, **characterized in that** the central ground point is formed through an area of the shielding case (4).

6. The tube conveyor according to Claim 5, **characterized in that** the area of the shielding case (4), at the same time, serves to hold the evaluation circuit (7).

7. The tube conveyor according to anyone of the preceding claims, **characterized in that** the tube conveyor additionally encompasses a bypass conductor (ÜL') for establishing an electrical through-connection of all device parts, wherein the bypass conductor (ÜL') establishes an electrical through-connection of the flange parts allocated to the continuing transporting tubes (2) and facing away from the shielding case (4).

## Revendications

1. Installation de transport par conduites avec un équipement récepteur d'un dispositif à fonctionnement électromagnétique pour détecter des éléments étrangers dans le flux de matière d'une installation de transport par conduites, étant précisé que l'installation de transport par conduites comprend :
une section de conduite non métallique (8), au moins une bobine (5, 6, 5'), un circuit d'évaluation (7) avec un point de connexion à la masse, et un boîtier de blindage métallique (4) avec deux plaques d'extrémité (4') aptes à être reliées à des brides (3, 3') par l'intermédiaire d'une couche isolante (9), étant précisé
- que la section de conduite non métallique (8) sur la trajectoire de transport de l'installation de transport par conduites est entourée par la ou les bobines (5, 6, 5') qui, pour détecter des variations de champ provoquées par des éléments étrangers dans le flux de produit transporté, sont reliées au circuit d'évaluation (7),
- que cette section de conduite non métallique (8) est entourée par le boîtier de blindage métallique (4), qui se prolonge par des conduites de transport métalliques de continuation (2) de l'installation de transport par conduites, et
- que le boîtier de blindage (4) qui entoure la section de conduite non métallique (8) et les bobines (5, 6, 5') est isolé électriquement par rapport aux conduites de transport métalliques de continuation (2) pour le produit transporté,
- qu'aux deux plaques d'extrémité (4') du boîtier de blindage (4) qui entoure les bobines (5, 6, 5') sont fixées de manière isolante électriquement les brides métalliques de conduite (3, 4) avec une surface d'application plate contre ledit boîtier de blindage (4), avec entre les deux une couche de matériau isolant (9), et
- que le boîtier de blindage (4) ainsi isolé est relié de manière conductrice d'électricité au point de connexion à la masse du circuit d'évaluation (7).

2. Installation de transport par conduites selon la revendication 1, **caractérisée en ce que** le boîtier de blindage (4) comprend une ligne de blindage qui relie le boîtier de blindage (4) au point de connexion à la masse du circuit d'évaluation (7), étant précisé que la ligne de blindage comprend des lignes (ML, L1, L2) qui vont de la ou des bobines (5, 6, 5') jusqu'au circuit d'évaluation (7).

3. Installation de transport par conduites selon la revendication 2, **caractérisée en ce que** la ligne de blindage comprend un blindage, étant précisé que ledit blindage est conçu comme une tresse de blindage métallique qui entoure les lignes.

4. Installation de transport par conduites selon l'une des revendications précédentes, **caractérisée en ce que** le circuit d'évaluation (7) est disposé dans le boîtier de blindage (4), qui présente un point central de connexion à la masse prévu en même temps comme point de potentiel de référence du circuit d'évaluation (7).

5. Installation de transport par conduites selon la revendication 4, **caractérisée en ce que** le point central de connexion à la masse est formé par une surface du boîtier de blindage (4).

6. Installation de transport par conduites selon la revendication 5, **caractérisée en ce que** la surface du boîtier de blindage (4) sert en même de fixation pour le circuit d'évaluation (7).

7. Installation de transport par conduites selon l'une des revendications précédentes, **caractérisée en ce que** l'installation de transport par conduites comprend en supplément un conducteur shunt (ÜL') pour une liaison électrique transversale de tous les éléments d'installation, étant précisé que le conducteur shunt (ÜL') assure la liaison électrique transversale d'éléments de bride associés aux conduites de transport de continuation (2) et opposés au boîtier de blindage (4).
